# EUROPEAN PATENT APPLICATION

(11) **EP 4 756 790 A1**
(43) Date of publication of application: **10.06.2026**
(21) Application number: 25211109.1
(22) Date of filing: 24.10.2025
(51) Int. Cl.: G10H 1/00

(54) **AI SONG EDITING METHOD AND APPARATUS, ELECTRONIC DEVICE, AND STORAGE MEDIUM**

(30) Priority: 06.12.2024 CN 202411795467
(71) Applicant: Beijing Zitiao Network Technology Co., Ltd., Beijing 100190 (CN)
(72) Inventor: CHEN, Di, Beijing, 100028 (CN); SUN, Dejun, Beijing, 100028 (CN); YANG, Yuhao, Beijing, 100028 (CN); CHAI, Ziqian, Beijing, 100028 (CN); ZHANG, Peihui, Beijing, 100028 (CN)
(74) Representative: Marks & Clerk LLP

(57) **Abstract**

The embodiments of the present disclosure provide an AI song editing method and apparatus, an electronic device and a storage medium. First lyrics of a first song are displayed after the first song and the corresponding first lyrics are generated, where the first song is audio data generated based on artificial intelligence technology; second lyrics are generated in response to a modification instruction for first text in the first lyrics, where the second lyrics include second text corresponding to a play timestamp of the first text; and a second song is generated based on the second text in response to generating the second lyrics, where the second song includes a target song segment and a non-target song segment, the target song segment is a song segment corresponding to the second text, and a melody of the non-target song segment is the same as a melody of a corresponding song segment in the first song.

## Description

### TECHNICAL FIELD

Embodiments of the present disclosure relate to the field of Internet technologies and, in particular, to an AI song editing method, an apparatus, an electronic device, and a storage medium.

### BACKGROUND

At present, artificial intelligence (Artificial Intelligence) technology has been more and more applied in various industries. For example, training a song generation model through music samples may enable the model to have the ability of "creating" music, thereby generating an "original song" that meets user requirements, that is, a song generated based on AIGC technology, which may also be referred to as an AI song for short.

After the AI song is generated by the AIGC technology, since the lyrics content in the AI song is generated by the AI model, problems such as inappropriate lyrics content and inaccurate content meaning often occur. In the related art, only by adding corresponding restrictions in the prompt and regenerating the AI song, a song that meets the user requirements may be obtained.

### SUMMARY

Embodiments of the present disclosure provide an AI song editing method, an apparatus, an electronic device, and a storage medium.

In a first aspect, an embodiment of the present disclosure provides an AI song editing method, including:
displaying first lyrics of a first song after the first song and the corresponding first lyrics are generated, where the first song is audio data generated based on artificial intelligence technology; generating second lyrics in response to a modification instruction for first text in the first lyrics, where the second lyrics include second text corresponding to a play timestamp of the first text; and generating a second song based on the second text in response to generating the second lyrics, where the second song includes a target song segment and a non-target song segment, the target song segment is a song segment corresponding to the second text, the non-target song segment is a remaining song segment in the second song other than the target song segment, and a melody of the non-target song segment is the same as a melody of a second original song segment corresponding to a play timestamp of the non-target song segment in the first song.

In a second aspect, an embodiment of the present disclosure provides an AI song editing apparatus, including:
a display module, configured to display first lyrics of a first song after the first song and the corresponding first lyrics are generated, where the first song is audio data generated based on artificial intelligence technology;
a processing module, configured to generate second lyrics in response to a modification instruction for first text in the first lyrics, where the second lyrics include second text corresponding to a play timestamp of the first text; and
a generation module, configured to generate a second song based on the second text in response to generating the second lyrics, where the second song includes a target song segment and a non-target song segment, the target song segment is a song segment corresponding to the second text, the non-target song segment is a remaining song segment in the second song other than the target song segment, and a melody of the non-target song segment is the same as a melody of a second original song segment corresponding to a play timestamp of the non-target song segment in the first song.

In a third aspect, an embodiment of the present disclosure provides an electronic device, including: a processor and a memory;
the memory stores a computer-executable instruction;
the processor executes the computer-executable instruction stored in the memory to cause the at least one processor to execute the AI song editing method according to the first aspect above and various possible designs of the first aspect.

In a fourth aspect, an embodiment of the present disclosure provides a computer-readable storage medium, where a computer-executable instruction is stored in the computer-readable storage medium, and when the computer-executable instruction is executed by a processor, the AI song editing method according to the first aspect above and various possible designs of the first aspect is implemented.

In a fifth aspect, an embodiment of the present disclosure provides a computer program product, including a computer program, where the AI song editing method according to the first aspect above and various possible designs of the first aspect is implemented when the computer program is executed by a processor.

### BRIEF DESCRIPTION OF THE DRAWINGS

In order to more clearly explain the technical solutions in the embodiments of the present disclosure or in the related art, the drawings that need to be used in the description of the embodiments or the related art will be briefly introduced below. Obviously, the drawings in the following description are some embodiments of the present disclosure, and for those of ordinary skill in the art, other drawings may be obtained according to these drawings without paying creative efforts.
Fig. 1 is an application scenario diagram of an AI song editing method provided by an embodiment of the present disclosure;
Fig. 2 is a first flowchart of an AI song editing method provided by an embodiment of the present disclosure;
Fig. 3 is a schematic interface diagram of a target application provided by an embodiment of the present disclosure;
Fig. 4 is a flowchart of a specific implementation of step S102 in the embodiment shown in Fig. 2;
Fig. 5 is a schematic diagram of a process of generating second lyrics provided by an embodiment of the present disclosure;
Fig. 6 is a schematic diagram of a process of generating a second song provided by an embodiment of the present disclosure;
Fig. 7 is a second flowchart of an AI song editing method provided by an embodiment of the present disclosure;
Fig. 8 is a flowchart of a possible implementation of step S205 in the embodiment shown in Fig. 2;
Fig. 9 is a flowchart of another possible implementation of step S205 in the embodiment shown in Fig. 2;
Fig. 10 is a structural block diagram of an AI song editing apparatus provided by an embodiment of the present disclosure;
Fig. 11 is a schematic structural diagram of an electronic device provided by an embodiment of the present disclosure; and
Fig. 12 is a schematic diagram of a hardware structure of an electronic device provided by an embodiment of the present disclosure.

### DETAILED DESCRIPTION

In order to make the purpose, technical solutions and advantages of the embodiments of the present disclosure clearer, the technical solutions in the embodiments of the present disclosure will be described clearly and completely below in combination with the drawings in the embodiments of the present disclosure. Obviously, the described embodiments are part of the embodiments of the present disclosure, but not all of them. Based on the embodiments in the present disclosure, all other embodiments obtained by those of ordinary skill in the art without paying creative efforts belong to the protection scope of the present disclosure.

It should be noted that the user information (including but not limited to user device information, user personal information, etc.) and data (including but not limited to data for analysis, stored data, displayed data, etc.) involved in the present disclosure are all information and data authorized by users or fully authorized by all parties, and the collection, use and processing of relevant data need to comply with relevant laws, regulations and standards of relevant countries and regions, and provide corresponding operation entry for users to choose authorization or rejection.

The application scenarios of the embodiments of the present disclosure are explained below.

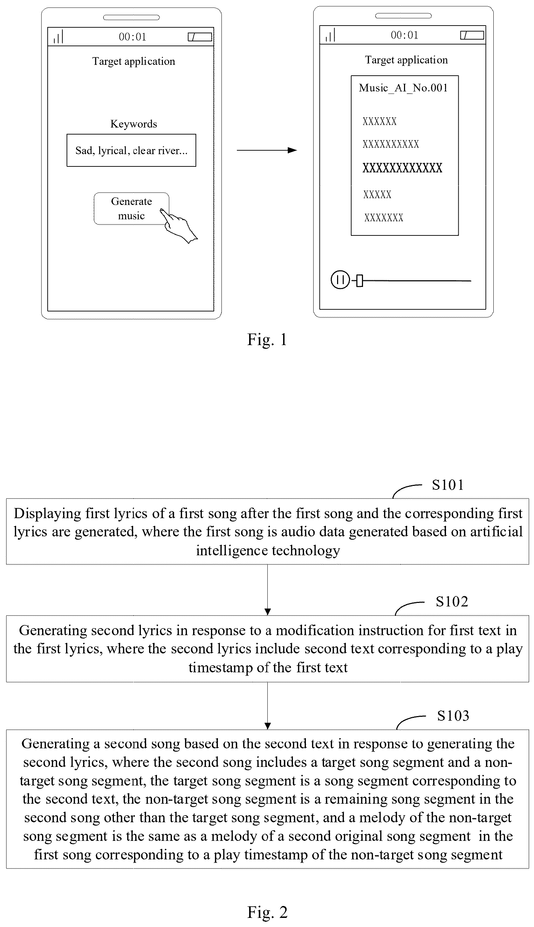

Fig. 1 is an application scenario diagram of an AI song editing method provided by an embodiment of the present disclosure. The AI song editing method provided by the embodiment of the present disclosure may be applied to an application (APP) with song generation and editing functions, such as a song application, a short video application, etc. More specifically, it may be applied to an application scenario of modifying lyrics in an AI song. An execution body of this embodiment may be a terminal device running the above application with song generation and editing functions, may be a server deploying a server corresponding to the above application, or may be other electronic devices with similar functions. When the execution body is a terminal device, the terminal device executes the method provided by this embodiment by running the above application; when the execution body is a server, a server side of the above application with song generation function or video generation function may run partially or completely on the server, and the method provided by this embodiment is executed on the server side, while the terminal device runs a client side of the application, and the server and the terminal device communicate based on the server side-client side, so that the terminal device may obtain the execution result of the method provided by this embodiment and display it as needed.

In some embodiments, the terminal device or the server may implement the AI song editing method provided by the embodiments of the present disclosure by running various computer executable instructions or computer programs. For example, the computer executable instructions may be program-level commands, machine instructions or software instructions. The computer program may be a native program or software module in an operating system; may be a local application, that is, a program that needs to be installed in the operating system before running, or may be a mini-program embedded in any APP, that is, a program that runs based on a browser environment. In summary, the above computer executable instructions may be instructions in any form, and the above computer program may be an application, a module or a plugin in any form, and the specific implementation form may be configured as needed. Further, in the process of implementing the AI song editing method provided by the embodiments of the present disclosure, the terminal device may execute the method by running computer executable instructions or computer programs set locally, or may execute the method by calling computer executable instructions or computer programs set in an external server. In some embodiments, the server may be an independent physical server, a server cluster or distributed system composed of multiple physical servers, or may be a cloud server that provides basic cloud computing services such as cloud services, cloud storage, cloud communication, cloud database, cloud computing, cloud functions, network services, middleware services, domain name services, security services, content delivery network (CDN), and big data and artificial intelligence platforms, where the cloud services may be interactive processing services for the terminal device to call.

As shown in Fig. 1, taking a terminal device as an example, a target application with song generation function is run in the terminal device. After the target application is started, a user operates the terminal device to input a prompt for generating a song into the target application, as shown in the figure, including: "sad", "lyric", "clear river", etc. After that, based on the above prompt, the target application calls a song generation model deployed in the cloud to generate a corresponding "original song", that is, an AI song (shown as Music_AI_No.001 in the figure), and sends it back to the terminal device. After receiving the AI song, the terminal device side will display the lyrics corresponding to the AI song (represented by "X" in the figure), and play the AI song based on user instructions.

In the related art, after an AI song is generated by AI technology, since the lyrics content in the AI song is generated by an AI model, the user cannot edit it accurately, so problems such as inappropriate lyrics content and inaccurate content meaning often occur. For the above problems, in the related art, the problem of inappropriate lyrics content may be avoided only by adding corresponding restrictions in the prompt and regenerating the AI song. However, at the same time, because the melody and lyrics of the AI song are generated by the model at the same time, there is a coupling between them. Therefore, after the AI song is regenerated, the melody of the newly generated AI song may be changed, and the purpose of only modifying the lyrics without changing the melody cannot be achieved. As a result, problems such as the inability to accurately modify the lyrics of the AI song and the complex interaction process occur, affecting the user experience.

An embodiment of the present disclosure provides an AI song editing method to solve the above problems.

Referring to Fig. 2, Fig. 2 is a first flowchart of an AI song editing method provided by an embodiment of the present disclosure. The method of this embodiment may be applied to a terminal device, and the AI song editing method includes the following steps.

Step S101: displaying first lyrics of a first song after the first song and the corresponding first lyrics are generated, where the first song is audio data generated based on artificial intelligence technology.

Step S102: generating second lyrics in response to a modification instruction for first text in the first lyrics, where the second lyrics include second text corresponding to a play timestamp of the first text.

Exemplarily, referring to the schematic diagram of the application scenario shown in Fig. 1, the terminal device generates an AI song, that is, the first song, based on AIGC technology by running a target application with song generation function. The process of generating such an AI song based on AIGC technology usually includes the steps of receiving a prompt input by the user and calling a pre-trained song generation model to generate music matching the prompt based on the prompt, which will not be introduced in detail here. After the first song is generated, the first song and the corresponding first song text (i.e., the lyrics of the first song) are displayed in the target application.

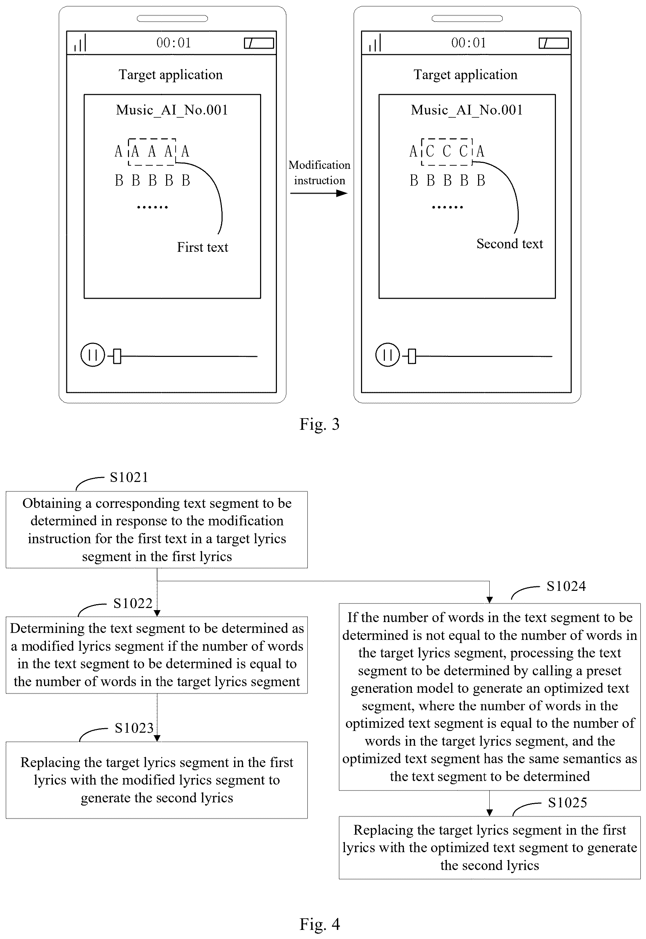

Further, after displaying the first lyrics of the first song, when the user needs to modify the lyrics of the first song, the user will input a modification instruction to the terminal device, and the modification instruction is for the first text in the first lyrics, specifically, one or more of adding, deleting, and changing the content of the first lyrics, where the content changed in the first lyrics is the first text. Fig. 3 is a schematic interface diagram of a target application provided by an embodiment of the present disclosure. As shown in Fig. 3, exemplarily, after the target application generates the first song, the song name of the first song is Music_AI_No.001, and when the first song is played or jumped to, the first lyrics of the first song are synchronously displayed in the play interface of the target application, for example, including "AAAAA", "BBBBB", etc. shown in the figure. The modification instruction modifies the 2nd, 3rd and 4th characters "AAA" in the text segment "AAAAA" and adjusts them to "CCC", then the modified text segment becomes "ACCCA". The above text "AAA" before modification is the first text; while the modified text "CCC" is the second text. Correspondingly, the lyrics text including the above modified text segment is the second lyrics. In another possible implementation, multiple pieces of the first text are modified by the modification instruction, and the positions of at least two pieces of the first text in the first lyrics are discontinuous, then the positions of the correspondingly generated second text in the second lyrics are also discontinuous.

In a possible implementation, as shown in Fig. 4, a specific implementation of step S102 includes the following steps.

Step S1021: obtaining a corresponding text segment to be determined in response to the modification instruction for the first text in a target lyrics text segment in the first lyrics, and detecting the number of words in the text segment to be determined.

Step S1022: determining the text segment to be determined as a modified lyrics text segment if the number of words in the text segment to be determined is equal to the number of words in the target lyrics text segment.

Step S1023: replacing the target lyrics text segment in the first lyrics with the modified lyrics text segment to generate the second lyrics.

Exemplarily, the modification instruction input by the user is used to modify the first text in the target lyrics text segment in the first lyrics, where the first lyrics are composed of multiple lyrics text segments, and each lyrics text segment may correspond to one sentence, for example, it may be divided by punctuation. Each lyrics text segment is composed of one or more words, and the word is, for example, single Chinese character. After one or more pieces of the first text are modified based on the modification instruction, a modified text segment, that is, the text segment to be determined, is first generated, and then the text segment to be determined is detected to ensure that the number of Chinese characters in the modified text segment to be determined is consistent with the number of words in the target lyrics text segment, that is, the modification instruction shall not change the number of words in the target lyrics text segment. When it is detected and confirmed that the number of words in the text segment to be determined is equal to the number of words in the target lyrics text segment, the modified text segment to be determined is determined as the modified lyrics text segment. After that, the target lyrics text segment in the first lyrics is replaced with the modified lyrics text segment to generate the second lyrics, thus realizing the generation of the second lyrics. In another case, if the number of words in the text segment to be determined is not equal to the number of words in the target lyrics text segment after detection, prompt information may be displayed to prompt the user to re-input the modification instruction.

Due to the particularity of the AI song, after the lyrics amount of the AI song changes, the vocal component in the AI song (that is, the vocal performance part of the song) will change, which may lead to the mismatch between the vocal component and the melody of the song itself. For example, after the lyrics amount increases, the pace of the vocal performance will inevitably increase while ensuring that the melody does not change, resulting in the imbalance between the song melody and the vocal performance and affecting the quality of the final generated song. In this embodiment, for the above problems, when the user modifies the lyrics (after the terminal device responds to the modification instruction), the terminal device detects the number of words in the text segment to be determined generated based on the modification instruction, and only when it is consistent with the number of words in the original target lyrics text segment, the subsequent steps are executed, thereby ensuring that the number of words in the lyrics text before and after modification is consistent, avoiding the problem that the melody and the vocal performance are out of tune and affecting the quality of the final generated second song, and improving the song quality of the second song.

Further, optionally, the steps of this embodiment further include the following steps.

Step S1024: if the number of words in the text segment to be determined is not equal to the number of words in the target lyrics text segment, processing the text segment to be determined by calling a preset generation model to generate an optimized text segment, where the number of words in the optimized text segment is equal to the number of words in the target lyrics text segment, and the optimized text segment has the same semantics as the text segment to be determined.

Step S1025: replacing the target lyrics text segment in the first lyrics with the optimized text segment to generate the second lyrics.

Exemplarily, in another case, if the number of words in the text segment to be determined is not equal to the number of words in the target lyrics text segment, in addition to the solution of rejecting the modification instruction and displaying the prompt information, the characteristics of generating and modifying the AI song on the same platform (that is, the process of generating the first song and generating the second song based on the first song are both realized by the target application) may be utilized to optimize the modification instruction input by the user, so as to obtain a text segment, that is, the optimized text segment, in which the number of words is equal to the number of words in the target lyrics text segment and which has the same semantics as the text segment to be determined. This process may be realized by the preset generation model, that is, the text segment to be determined is processed by the preset generation model to generate the optimized text segment. The preset generation model in the steps of this embodiment may be a song generation model that generates the first song and the corresponding first lyrics. Using prior knowledge in the song generation model to optimize the text segment to be determined may make the generated optimized text segment better consistent with the original lyrics (first lyrics) and have better music attributes, such as better rhythm, so that the second song generated by the modified second lyrics has better music quality.

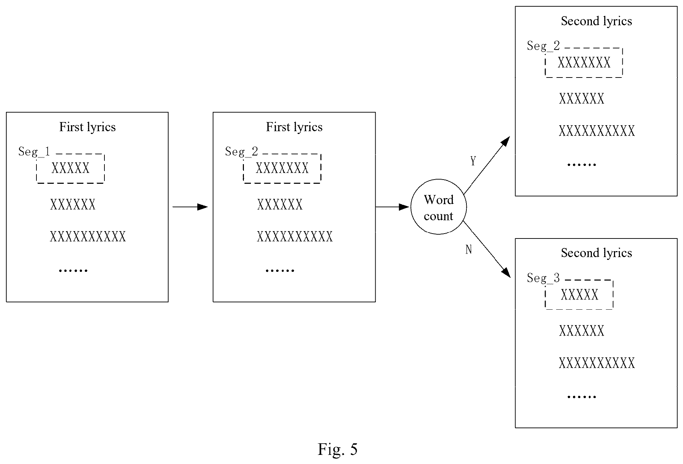

Fig. 5 is a schematic diagram of a process of generating second lyrics provided by an embodiment of the present disclosure. As shown in Fig. 5, firstly, based on a modification instruction, a target lyrics text segment (shown as Seg_1 in the figure) where the modified first text is located is determined from the first lyrics (represented by "X" in the figure), and by modifying the first text, the target lyrics text segment is modified into a text segment to be determined (shown as Seg_2 in the figure); after that, the number of words in the text segment to be determined is detected, if the number of words in the text segment to be determined is equal to the number of words in the target lyrics text segment (shown as Y path in the figure), the original target lyrics text segment is replaced with the text segment to be determined, thereby generating the second lyrics; if the number of words in the text segment to be determined is not equal to the number of words in the target lyrics text segment (shown as N path in the figure), the text to be determined is processed by using the song generation model, for example, the second text is modified to generate an optimized text segment (shown as Seg_3 in the figure), and the original target lyrics text segment is replaced with the optimized text segment, thereby generating the second lyrics.

In the steps of this embodiment, in the case that the number of words in the text segment to be determined is not equal to the number of words in the target lyrics text segment, the text segment to be determined is optimized by the song generation module to generate the optimized text segment that better matches the original first song, and the second lyrics are generated based on the optimized text segment, which on one hand ensures that the number of words in the lyrics before and after modification is consistent, thereby avoiding the problem of imbalance between the melody and the vocal performance, and on the other hand may improve the consistency between the modified second lyrics and the original first lyrics and the musicity of the second lyrics itself, so that the second song generated by the modified second lyrics has better music quality.

Step S103: generating a second song based on the second text in response to generating the second lyrics, where the second song includes a target song segment and a non-target song segment, the target song segment is a song segment corresponding to the second text, the non-target song segment is a remaining song segment in the second song other than the target song segment, and a melody of the non-target song segment is the same as a melody of a second original song segment in the first song corresponding to a play timestamp of the non-target song segment.

Exemplarily, further, after the second lyrics are generated, that is, the lyrics of the first song are modified, the terminal device will regenerate the second lyrics based on the second text in the second lyrics. Specifically, the terminal device uses the second text to regenerate the corresponding original song segment (i.e., the first original song segment) in the first song to generate the corresponding target song segment, while the other song segments (i.e., the second original song segment) in the first song are not adjusted and are directly used as the non-target song segment, and then the above target song segment and the non-target song segment are merged and combined to generate the second song. In a possible implementation, the above steps may be implemented by a song generation model, for example, the second text, the play timestamp corresponding to the second text and the first song are input into the above song generation model, and the song generation model may output the second song with the above characteristics. In this process, only the song segment corresponding to the second text involved in the modification instruction is regenerated, therefore, at least the melody of other parts in the song will not be affected, thereby realizing the accurate modification of the specified lyrics in the AI song.

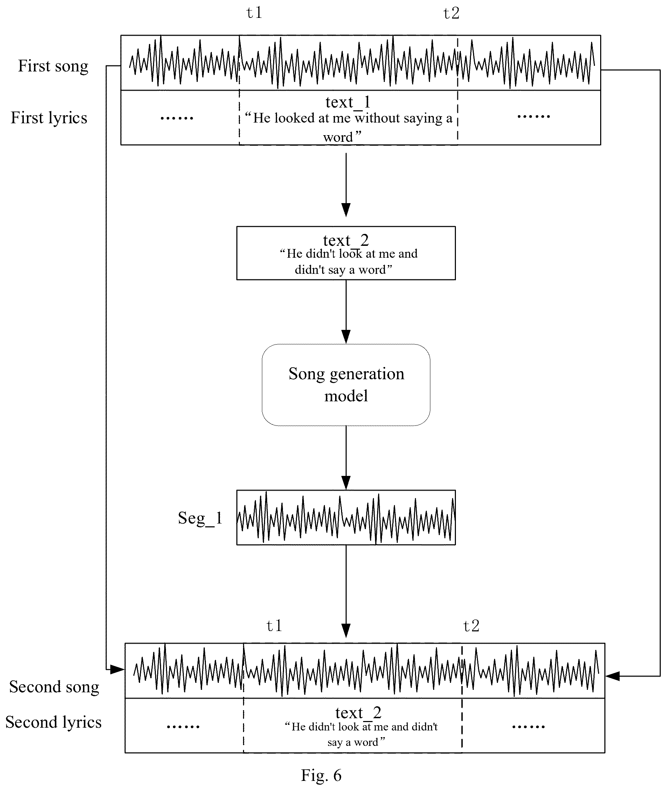

Fig. 6 is a schematic diagram of a process of generating a second song provided by an embodiment of the present disclosure. The above process will be further introduced below in combination with Fig. 6. As shown in Fig. 6, firstly, based on a modification instruction input by a user, first text text_1 in the first lyrics is determined, and the first text text_1 may be composed of one or more Chinese characters, and its content is, for example, "He looked at me without saying a word". After that, the first text text_1 is modified to second text text_2, and the content of the second text text_2 is, for example, "He didn't look at me and didn't say a word". The play timestamp of the first text includes t1 and t2, which represent the start time and end time of the first text text_1, respectively. After that, based on the second text text_2, a new song segment, that is, a target song segment (shown as Seg_1 in the figure) is generated by the song generation model; on the other hand, based on the play timestamp including t1 and t2, a non-target song segment (shown as Seg_2 in the figure) is intercepted from the first song; finally, the second song is generated by combining the target song segment and the non-target song segment.

In this embodiment, the first lyrics of the first song are displayed after the first song and the corresponding first lyrics are generated, where the first song is audio data generated based on artificial intelligence technology; the second lyrics are generated in response to the modification instruction for the first text in the first lyrics, where the second lyrics include the second text corresponding to the play timestamp of the first text; and the second song is generated based on the second text in response to generating the second lyrics, where the second song includes the target song segment and the non-target song segment, the target song segment is the song segment corresponding to the second text, the non-target song segment is the remaining song segment in the second song other than the target song segment, and the melody of the non-target song segment is the same as the melody of the second original song segment corresponding to the play timestamp of the non-target song segment in the first song. By displaying the first lyrics of the first song and modifying the first lyrics to the second lyrics in response to the modification instruction, the target song segment in the second song is generated based on the second text that is changed in the second lyrics relative to the first lyrics, while the non-target song segment in the second song is not changed, thereby realizing the precise modification of the lyrics without changing the melody of the song, and improving the flexibility and accuracy of lyrics modification of the AI song and interaction efficiency.

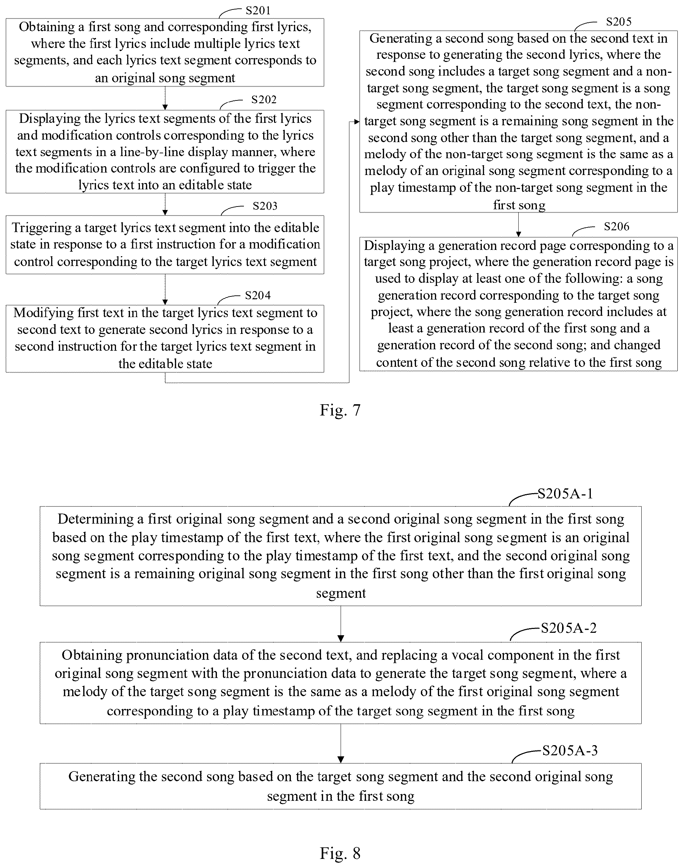

Referring to Fig. 7, Fig. 7 is a second flowchart of an AI song editing method provided by an embodiment of the present disclosure. In this embodiment, on the basis of the embodiment shown in Fig. 2, steps S102 to S103 are further detailed, and the AI song editing method includes the following steps.

Step S201: obtaining a first song and corresponding first lyrics, where the first lyrics include multiple lyrics text segments, and each lyrics text segment corresponds to an original song segment.

Step S202: displaying the lyrics text segments of the first lyrics and modification controls corresponding to the lyrics text segments in a line-by-line display manner, where the modification controls are configured to trigger the lyrics text segments into an editable state.

Step S203: triggering a target lyrics text segment into an editable state in response to a first instruction for a modification control corresponding to the target lyrics text segment.

Step S204: modifying the first text in the target lyrics text segment to the second text to generate the second lyrics in response to a second instruction for the target lyrics text segment in the editable state.

Exemplarily, after generating the first song and the corresponding first lyrics by the target application, the terminal device displays each of the lyrics text segments of the first lyrics in a line-by-line display manner, where the lyrics text segment may be a paragraph or a sentence in the first lyrics. Each of the lyrics text segments may be correspondingly displayed with the playing progress of the first song. Specifically, for example, as the first song is played or jumped to, when the first song is played or jumped to the T moment, the lyrics text segment where the lyrics corresponding to the T moment are located is also synchronously displayed. Specifically, the lyrics text segment may be displayed separately, or multiple lyrics text segments may be displayed, but the lyrics text segment corresponding to the T moment is highlighted. The specific implementation is not limited.

Further, when displaying each lyrics text segment, a modification control is also displayed in the line where the lyrics text segment is located. When the modification control is triggered, for example, when the user clicks the modification control (triggering the first instruction), the lyrics text segment in this line is triggered into the editable state, and then the user may edit the lyrics text segment in this line (triggering the second instruction). When the editing is completed, for example, when the cursor leaves this line, the lyrics text segment is restored to the non-editable state. In the steps of this embodiment, the modification control is provided for each lyrics text segment to control the editable state of the lyrics text segment, thereby avoiding mis-editing and mis-modification of the lyrics text segment and improving the operation efficiency in the lyrics modification process.

Optionally, the method further includes the following steps.

Step S204A: displaying a play timestamp and/or play duration corresponding to the lyrics text segment before and after responding to the modification instruction.

Exemplarily, the play timestamp corresponding to the lyrics text segment, for example, is the play time in the first song corresponding to the start position of the lyrics text segment, which is used to represent the position of the vocal component (vocal performance) corresponding to the lyrics text segment in the first song; while the play duration represents the duration of the vocal component corresponding to the lyrics text segment in the first song. After the terminal device responds to the modification instruction, if the length of the lyrics text segment changes, it may cause the position and duration of the vocal component corresponding to the lyrics text segment to also change accordingly. In this embodiment, before and after responding to the modification instruction, the play timestamp and/or play duration corresponding to the lyrics text segment are displayed to show the song changes caused by the modification instruction, so that the user may control the content and duration of the final generated song based on this information, thereby improving the interaction efficiency in the case that the song length changes due to the lyrics change.

Step S205: generating a second song based on the second text in response to generating the second lyrics, where the second song includes a target song segment and a non-target song segment, the target song segment is a song segment corresponding to the second text, the non-target song segment is a remaining song segment in the second song other than the target song segment, and a melody of the non-target song segment is the same as a melody of an original song segment corresponding to a play timestamp of the non-target song segment in the first song.

Exemplarily, after the first text is modified to generate the second text, the terminal device will synchronously modify the song content in the first song based on the newly generated second text, so that the song content is consistent with the lyrics content. The song content referred to here includes at least a music component and a vocal component, where the vocal component refers to the component sung by a human in the song, and this part is related to the lyrics, and after the lyrics change, the corresponding vocal component also needs to be adjusted accordingly based on AIGC technology; while the music component refers to various components in the song, such as the soundtrack used to express the song melody and the harmony not involving the lyrics. After the lyrics change, in an implementation, the music component does not change, that is, the song melody does not change, only the vocal component changes. In this case, as shown in Fig. 8, a specific implementation of step S205 includes:
Step S205A-1: determining a first original song segment and a second original song segment in the first song based on the play timestamp of the first text, where the first original song segment is an original song segment corresponding to the play timestamp of the first text, and the second original song segment is a remaining original song segment in the first song other than the first original song segment;
Step S205A-2: obtaining pronunciation data of the second text, and replacing a vocal component in the first original song segment with the pronunciation data to generate the target song segment, where a melody of the target song segment is the same as a melody of the first original song segment corresponding to a play timestamp of the target song segment in the first song; and
Step S205A-3: generating the second song based on the target song segment and the second original song segment in the first song.

Exemplarily, in the steps of this embodiment, firstly, the terminal device determines the first original song segment and the second original song segment in the first song based on the play timestamp of the first text indicated by the modification instruction, where the first original song segment is an original song segment corresponding to the play timestamp of the first text, and the second original song segment is a remaining original song segment in the first song other than the first original song segment, that is, the first song is divided into two parts. After that, the pronunciation data of the modified second text is obtained, the pronunciation data is prerecorded audio data or audio data generated by inputting the second text into a pre-trained speech model. After that, the speech data of the second text is used to replace the vocal component in the first original song segment to generate the target song segment, and this process may be realized by the pre-trained speech model. The song melody of the target song segment is the same as the song melody of the corresponding part in the first song, that is, the music component does not change. Finally, the generated target song segment is concatenated with the second original song segment in the first song to generate the second song. Steps S205A-1 and S205A-2 may be executed at one time based on the same speech mode, that is, after the first song, the second text and the corresponding play timestamp are input into the song generation model, the song generation model may obtain the pronunciation data corresponding to the second text by calling external data, and then replace the vocal component in the first original song segment based on the pronunciation data to generate the target song segment, and the specific implementation process will not be repeated.

In the steps of this embodiment, the vocal component at the corresponding position in the first song is replaced with the pronunciation data of the second text to generate the target song segment, and the target song segment is concatenated with the second original song segment in the first song to generate the second song. This implementation is simple in execution process, and the second song may be generated only by adjusting the vocal component of the modified song segment, and at the same time, it is ensured that the melody of the generated second song is completely consistent with the melody of the first song, thereby realizing the purpose of precise lyrics modification by only modifying the song without changing the melody.

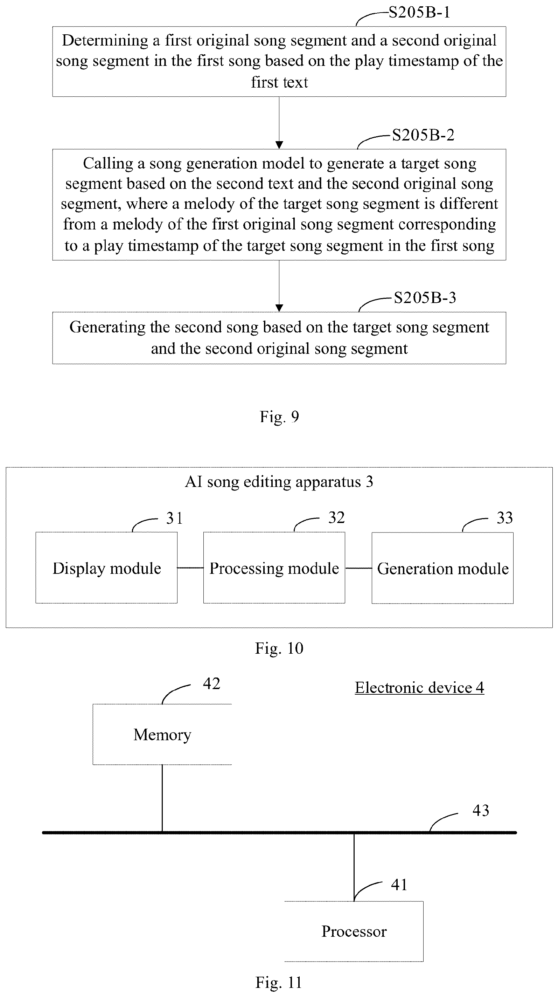

In another possible implementation, the music component of the modified song segment changes, that is, the song melody and the vocal component change at the same time. In this case, as shown in Fig. 9, a specific implementation of step S205 includes:
Step S205B-1: determining a first original song segment and a second original song segment in the first song based on the play timestamp of the first text;
Step S205B-2: calling a song generation model to generate a target song segment based on the second text and the second original song segment, where a melody of the target song segment is different from a melody of the first original song segment corresponding to a play timestamp of the target song segment in the first song; and
Step S205B-3: generating the second song based on the target song segment and the second original song segment.

Exemplarily, similarly, firstly, the terminal device determines the first original song segment and the second original song segment in the first song based on the play timestamp of the first text indicated by the modification instruction, and then calls the song generation model to perform "rework" for the second text, and at the same time, combines the second original song segment as contextual information to generate an audio segment matching the second original song segment, that is, the target song segment. Since the content in two dimensions of the vocal component and the music component is regenerated for the song segment corresponding to the second text by the song generation model, and the second text changes relative to the first text, the melody of the target song segment is generally different from the melody of the first original song segment corresponding to the play timestamp of the target song segment in the first song, but the melody of the target song segment may better match the modified second text. At the same time, due to the combination of the contextual information (the second original song segment), the consistency of the melody of the generated second song is also improved, and the song quality of the second song is improved.

Further, in a possible implementation, the first song and the second song belong to the same target song project. Specifically, one AI song corresponds to one song project, that is, the first song and the second song may be understood as different versions of the same AI song, and both of them are located under the same song project. Optionally, this embodiment further includes:
Step S206: displaying a generation record page corresponding to the target song project, where the generation record page is used to display at least one of the following: a song generation record corresponding to the target song project, where the song generation record includes at least a generation record of the first song and a generation record of the second song; and changed content of the second song relative to the first song.

Exemplarily, after the first song is modified to generate the second song, the generation record page corresponding to the target song project to which the first song and the second song belong may be further displayed in the target application, and the song generation record corresponding to the target song project is recorded in the generation record page, such as the generation record of the first song, the generation record of the second song, and the generation record of the third song generated after the second song is further modified. The generation record may include related information such as generation time and modification user; on the other hand, the changed content of the modified song relative to the song before modification is also recorded in the generation record page, for example, the changed content of the second song relative to the first song in this embodiment. The changed content includes, for example: the first text and the second text displayed in a comparative view; the melody change caused by the lyrics change. Therefore the user may obtain the modification history of the target song project through the generation record page corresponding to the target song project and perform restoration for different song versions, thereby improving the operation efficiency of song modification.

Corresponding to the AI song editing method of the above embodiments, Fig. 10 is a structural block diagram of an AI song editing apparatus provided by an embodiment of the present disclosure. The method introduced in the above embodiments may be performed by the AI song editing apparatus, and the apparatus may be implemented by software and/or hardware, and the apparatus may be integrated in an electronic device with certain data processing function. The electronic device may include, but is not limited to, a mobile terminal with big data processing capability, and a fixed terminal with big data processing capability, such as a desktop computer and a supercomputer.

For convenience of explanation, only parts related to the embodiments of the present disclosure are shown. Referring to Fig. 10, the AI song editing apparatus 3 includes:
a display module 31, configured to display first lyrics of a first song after the first song and the corresponding first lyrics are generated, where the first song is audio data generated based on artificial intelligence technology;
a processing module 32, configured to generate second lyrics in response to a modification instruction for first text in the first lyrics, where the second lyrics include second text corresponding to a play timestamp of the first text; and
a generation module 33, configured to generate a second song based on the second text in response to generating the second lyrics, where the second song includes a target song segment and a non-target song segment, the target song segment is a song segment corresponding to the second text, the non-target song segment is a remaining song segment in the second song other than the target song segment, and a melody of the non-target song segment is the same as a melody of a second original song segment corresponding to a play timestamp of the non-target song segment in the first song.

According to one or more embodiments of the present disclosure, the first lyrics include multiple lyrics text segments, and each lyrics text segment corresponds to an original song segment; the display module 31, when displaying the first lyrics of the first song, is further configured to display the lyrics text segments of the first lyrics and modification controls corresponding to the lyrics text segments a line-by-line display manner, where the modification controls are configured to trigger the lyrics text into an editable state; the modification instruction includes a first instruction and a second instruction, and the processing module 32 is further configured to: trigger a target lyrics text segment into the editable state in response to the first instruction for a modification control corresponding to the target lyrics text segment; and modify the first text in the target lyrics text segment to the second text to generate the second lyrics in response to the second instruction for the target lyrics text segment in the editable state.

According to one or more embodiments of the present disclosure, the display module 31 is further configured to display a play timestamp and/or play duration corresponding to the lyrics text segment before and after responding to the modification instruction.

According to one or more embodiments of the present disclosure, the processing module 32 is further configured to: obtain a corresponding text segment to be determined in response to the modification instruction for the first text in a target lyrics text segment in the first lyrics; detect the number of words in the text segment to be determined, and determine the text segment to be determined as a modified lyrics text segment if the number of words in the text segment to be determined is equal to the number of words in the target lyrics text segment; and replace the target lyrics text segment in the first lyrics with the modified lyrics text segment to generate the second lyrics.

According to one or more embodiments of the present disclosure, the processing module 32 is further configured to: if the number of words in the text segment to be determined is not equal to the number of words in the target lyrics text segment, process the text segment to be determined by calling a preset generation model to generate an optimized text segment, where the number of words in the optimized text segment is equal to the number of words in the target lyrics text segment, and the optimized text segment has the same semantics as the text segment to be determined; and replace the target lyrics text segment in the first lyrics with the optimized text segment to generate the second lyrics.

According to one or more embodiments of the present disclosure, the generation module 33, when generating the second song based on the second text, is further configured to: determine a first original song segment and a second original song segment in the first song based on the play timestamp of the first text, where the first original song segment is an original song segment corresponding to the play timestamp of the first text, and the second original song segment is a remaining original song segment in the first song other than the first original song segment; obtain pronunciation data of the second text, and replace a vocal component in the first original song segment with the pronunciation data to generate the target song segment, where a melody of the target song segment is the same as a melody of the first original song segment corresponding to a play timestamp of the target song segment in the first song; and generate the second song based on the target song segment and the second original song segment in the first song.

According to one or more embodiments of the present disclosure, the generation module 33, when generating the second song based on the second text, is further configured to: determine a first original song segment and a second original song segment in the first song based on the play timestamp of the first text; call a song generation model to generate the target song segment based on the second text and the second original song segment, where a melody of the target song segment is different from a melody of the first original song segment corresponding to a play timestamp of the target song segment in the first song; and generate the second song based on the target song segment and the second original song segment.

According to one or more embodiments of the present disclosure, the first song and the second song belong to the same target song project, and the display module 31 is further configured to display a generation record page corresponding to the target song project, where the generation record page is used to display at least one of the following: a song generation record corresponding to the target song project, where the song generation record includes at least a generation record of the first song and a generation record of the second song; and changed content of the second song relative to the first song.

The display module 31, the processing module 32, and the generation module 33 are connected in sequence. The AI song editing apparatus 3 provided by this embodiment may execute the technical solutions of the above method embodiments, and its implementation principle and technical effect are similar, which will not be repeated here in this embodiment.

Fig. 11 is a schematic structural diagram of an electronic device provided by an embodiment of the present disclosure. As shown in Fig. 11, the electronic device 4 includes:
a processor 41, and a memory 42 communicatively connected to the processor 41;
the memory 42 stores a computer-executable instruction; and
the processor 41 executes the computer-executable instruction stored in the memory 42 to implement the AI song editing method in the embodiments shown in FIGS. 2-9.

Optionally, the processor 41 and the memory 42 are connected through a bus 43.

The relevant description may be understood by referring to the relevant description and effects corresponding to the steps in the embodiments corresponding to FIGS. 2-9, which will not be repeated here.

An embodiment of the present disclosure provides a computer-readable storage medium, where a computer-executable instruction is stored in the computer-readable storage medium, and when the computer-executable instruction is executed by a processor, the AI song editing method provided by any one of the embodiments corresponding to FIGS. 2-9 of the present disclosure is implemented.

An embodiment of the present disclosure provides a computer program product, including a computer program, where the AI song editing method provided by any one of the embodiments corresponding to FIGS. 2-9 of the present disclosure is implemented when the computer program is executed by a processor.

In order to achieve the above embodiments, an embodiment of the present disclosure further provides an electronic device.

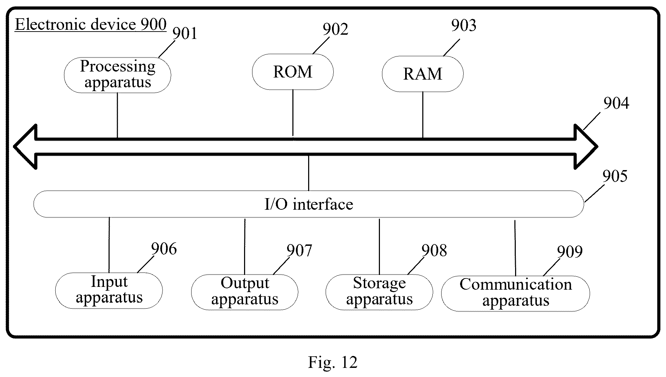

Referring to Fig. 12, it shows a schematic structural diagram of an electronic device 900 suitable for implementing the embodiments of the present disclosure, and the electronic device 900 may be a terminal device or a server. The terminal device may include, but is not limited to, a mobile terminal such as a mobile phone, a laptop, a digital broadcast receiver, a personal digital assistant (abbreviated as PDA), a tablet computer, a portable media player (abbreviated as PMP), a vehicle-mounted terminal (such as a vehicle navigation terminal), etc., and a fixed terminal such as a digital TV, a desktop computer, etc. The electronic device shown in Fig. 12 is only an example, and should not bring any limitation to the functions and application scope of the embodiments of the present disclosure.

As shown in Fig. 12, the electronic device 900 may include a processing apparatus (such as a central processing unit, a graphics processor, etc.) 901, which may perform various appropriate actions and processes according to a program stored in a read-only memory (abbreviated as ROM) 902 or a program loaded from a storage apparatus 908 into a random access memory (abbreviated as RAM) 903. In the RAM 903, various programs and data required for operations of the electronic device 900 are also stored. The processing apparatus 901, the ROM 902, and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a liquid crystal display (abbreviated as LCD), a loudspeaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 12 shows the electronic device 900 with various apparatuses, it should be understood that it is not required to implement or have all the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program contains program codes for executing the method shown in the flowchart. In such an embodiment, the computer program may be downloaded and installed from a network through the communication apparatus 909, or installed from the storage apparatus 908, or installed from the ROM 902. When the computer program is executed by the processing apparatus 901, the above functions defined in the method of the embodiments of the present disclosure are executed.

It should be noted that the above computer-readable medium in the present disclosure may be a computer-readable signal medium or a computer-readable storage medium or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program, which may be used by or in combination with an instruction execution system, apparatus or device. In the present disclosure, a computer-readable signal medium may include a data signal propagated in a baseband or as a part of a carrier wave, and computer-readable program codes are carried therein. This propagated data signal may adopt multiple forms, including but not limited to an electromagnetic signal, an optical signal or any suitable combination of the above. The computer-readable signal medium may also be any computer-readable medium other than the computer-readable storage medium, and the computer-readable signal medium may send, propagate or transmit a program used by or in combination with an instruction execution system, apparatus or device. The program codes contained on the computer-readable medium may be transmitted by any suitable medium, including but not limited to: a wire, an optical cable, an RF (radio frequency), etc., or any suitable combination of the above.

The above computer-readable medium may be included in the above electronic device or may exist alone without being assembled into the electronic device.

The above computer-readable medium carries one or more programs, and when the above one or more programs are executed by the electronic device, the electronic device is caused to execute the method shown in the above embodiments.

The computer program codes used to perform the operations of the present disclosure may be written in one or more programming languages or a combination thereof, where the above programming languages include object-oriented programming languages such as Java, Smalltalk, C++, and also include conventional procedural programming languages such as "C" language or similar programming languages. The program codes may be executed entirely on a user computer, partly on the user computer, as a stand-alone software package, partly on the user computer and partly on a remote computer, or entirely on the remote computer or server. In the case of involving a remote computer, the remote computer may be connected to the user computer through any kind of network, including a local area network (abbreviated as LAN) or a wide area network (abbreviated as WAN), or may be connected to an external computer (for example, connected by using Internet provided by an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units or modules described in the embodiments of the present disclosure may be implemented by software or by hardware. Among them, the name of the unit or module does not constitute a limitation on the unit itself under certain circumstances.

The functions described above herein may be performed at least partly by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logical device (CPLD) and the like.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium would include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In a first aspect, according to one or more embodiments of the present disclosure, an AI song editing method is provided, including:
displaying first lyrics of a first song after the first song and the corresponding first lyrics are generated, where the first song is audio data generated based on artificial intelligence technology; generating second lyrics in response to a modification instruction for first text in the first lyrics, where the second lyrics include second text corresponding to a play timestamp of the first text; and generating a second song based on the second text in response to generating the second lyrics, where the second song includes a target song segment and a non-target song segment, the target song segment is a song segment corresponding to the second text, the non-target song segment is a remaining song segment in the second song other than the target song segment, and a melody of the non-target song segment is the same as a melody of an original song segment corresponding to a play timestamp of the non-target song segment in the first song.

According to one or more embodiments of the present disclosure, the first lyrics include multiple lyrics text segments, and each of the lyrics text segments corresponds to an original song segment; the displaying the first lyrics of the first song includes: displaying the lyrics text segments of the first lyrics and modification controls corresponding to the lyrics text segments a line-by-line display manner, where the modification controls are configured to trigger the lyrics text into an editable state; the modification instruction includes a first instruction and a second instruction, and the generating second lyrics in response to a modification instruction for first text in the first lyrics includes: triggering a target lyrics text segment into the editable state in response to the first instruction for a modification control corresponding to the target lyrics text segment; and modifying the first text in the target lyrics text segment to the second text to generate the second lyrics in response to the second instruction for the target lyrics text segment in the editable state.

According to one or more embodiments of the present disclosure, the method further includes: displaying a play timestamp and/or play duration corresponding to the lyrics text segment before and after responding to the modification instruction.

According to one or more embodiments of the present disclosure, the generating second lyrics in response to a modification instruction for first text in the first lyrics includes: obtaining a corresponding text segment to be determined in response to the modification instruction for the first text in a target lyrics text segment in the first lyrics; detecting the number of words in the text segment to be determined, and determining the text segment to be determined as a modified lyrics text segment if the number of words in the text segment to be determined is equal to the number of words in the target lyrics text segment; and replacing the target lyrics text segment in the first lyrics with the modified lyrics text segment to generate the second lyrics.

According to one or more embodiments of the present disclosure, the method further includes: if the number of words in the text segment to be determined is not equal to the number of words in the target lyrics text segment, processing the text segment to be determined by calling a preset generation model to generate an optimized text segment, where the number of words in the optimized text segment is equal to the number of words in the target lyrics text segment, and the optimized text segment has the same semantics as the text segment to be determined; and replacing the target lyrics text segment in the first lyrics with the optimized text segment to generate the second lyrics.

According to one or more embodiments of the present disclosure, the generating a second song based on the second text includes: determining a first original song segment and a second original song segment in the first song based on the play timestamp of the first text, where the first original song segment is an original song segment corresponding to the play timestamp of the first text, and the second original song segment is a remaining original song segment in the first song other than the first original song segment; obtaining pronunciation data of the second text, and replacing a vocal component in the first original song segment with the pronunciation data to generate a target song segment, where a melody of the target song segment is the same as a melody of the first original song segment corresponding to a play timestamp of the target song segment in the first song; and generating the second song based on the target song segment and the second original song segment in the first song.

According to one or more embodiments of the present disclosure, the generating a second song based on the second text includes: determining a first original song segment and a second original song segment in the first song based on the play timestamp of the first text; calling a song generation model to generate a target song segment based on the second text and the second original song segment, where a melody of the target song segment is different from a melody of the first original song segment corresponding to a play timestamp of the target song segment in the first song; and generating the second song based on the target song segment and the second original song segment.

According to one or more embodiments of the present disclosure, the first song and the second song belong to the same target song project, and the method further includes: displaying a generation record page corresponding to the target song project, where the generation record page is used to display at least one of the following: a song generation record corresponding to the target song project, where the song generation record includes at least a generation record of the first song and a generation record of the second song; and changed content of the second song relative to the first song.

In a second aspect, according to one or more embodiments of the present disclosure, an AI song editing apparatus is provided, including:
a display module, configured to display first lyrics of a first song after the first song and the corresponding first lyrics are generated, where the first song is audio data generated based on artificial intelligence technology;
a processing module, configured to generate second lyrics in response to a modification instruction for first text in the first lyrics, where the second lyrics include second text corresponding to a play timestamp of the first text; and
a generation module, configured to generate a second song based on the second text in response to generating the second lyrics, where the second song includes a target song segment and a non-target song segment, the target song segment is a song segment corresponding to the second text, the non-target song segment is a remaining song segment in the second song other than the target song segment, and a melody of the non-target song segment is the same as a melody of a second original song segment corresponding to a play timestamp of the non-target song segment in the first song.

According to one or more embodiments of the present disclosure, the first lyrics include multiple lyrics text segments, and each of the lyrics text segments corresponds to an original song segment; the display module, when displaying the first lyrics of the first song, is further configured to display the lyrics text segments of the first lyrics and modification controls corresponding to the lyrics text segments a line-by-line display manner, where the modification controls are configured to trigger the lyrics text into an editable state; the modification instruction includes a first instruction and a second instruction, and the processing module is further configured to: trigger a target lyrics text segment into the editable state in response to the first instruction for a modification control corresponding to the target lyrics text segment; and modify the first text in the target lyrics text segment to the second text to generate the second lyrics in response to the second instruction for the target lyrics text segment in the editable state.

According to one or more embodiments of the present disclosure, the display module is further configured to display a play timestamp and/or play duration corresponding to the lyrics text segment before and after responding to the modification instruction.

According to one or more embodiments of the present disclosure, the processing module is further configured to: obtain a corresponding text segment to be determined in response to the modification instruction for the first text in a target lyrics text segment in the first lyrics; detect the number of words in the text segment to be determined, and determine the text segment to be determined as a modified lyrics text segment if the number of words in the text segment to be determined is equal to the number of words in the target lyrics text segment; and replace the target lyrics text segment in the first lyrics with the modified lyrics text segment to generate the second lyrics.

According to one or more embodiments of the present disclosure, the processing module is further configured to: if the number of words in the text segment to be determined is not equal to the number of words in the target lyrics text segment, process the text segment to be determined by calling a preset generation model to generate an optimized text segment, where the number of words in the optimized text segment is equal to the number of words in the target lyrics text segment, and the optimized text segment has the same semantics as the text segment to be determined; and replace the target lyrics text segment in the first lyrics with the optimized text segment to generate the second lyrics.

According to one or more embodiments of the present disclosure, the generation module, when generating a second song based on the second text, is further configured to: determine a first original song segment and a second original song segment in the first song based on the play timestamp of the first text, where the first original song segment is an original song segment corresponding to the play timestamp of the first text, and the second original song segment is a remaining original song segment in the first song other than the first original song segment; obtain pronunciation data of the second text, and replace a vocal component in the first original song segment with the pronunciation data to generate a target song segment, where a melody of the target song segment is the same as a melody of the first original song segment corresponding to a play timestamp of the target song segment in the first song; and generate the second song based on the target song segment and the second original song segment in the first song.

According to one or more embodiments of the present disclosure, the generation module, when generating a second song based on the second text, is further configured to: determine a first original song segment and a second original song segment in the first song based on the play timestamp of the first text; call a song generation model to generate a target song segment based on the second text and the second original song segment, where a melody of the target song segment is different from a melody of the first original song segment corresponding to a play timestamp of the target song segment in the first song; and generate the second song based on the target song segment and the second original song segment.

According to one or more embodiments of the present disclosure, the first song and the second song belong to the same target song project, and the display module is further configured to display a generation record page corresponding to the target song project, where the generation record page is used to display at least one of the following: a song generation record corresponding to the target song project, where the song generation record includes at least a generation record of the first song and a generation record of the second song; and changed content of the second song relative to the first song.

In a third aspect, according to one or more embodiments of the present disclosure, an electronic device is provided, including: at least one processor and a memory;
the memory stores a computer-executable instruction;
the at least one processor executes the computer-executable instruction stored in the memory to cause the at least one processor to execute the AI song editing method according to the first aspect above and various possible designs of the first aspect.

In a fourth aspect, according to one or more embodiments of the present disclosure, a computer-readable storage medium is provided, where a computer-executable instruction is stored in the computer-readable storage medium, and when the computer-executable instruction is executed by a processor, the AI song editing method according to the first aspect above and various possible designs of the first aspect is implemented.

In a fifth aspect, according to one or more embodiments of the present disclosure, a computer program product is provided, including a computer program, where the AI song editing method according to the first aspect above and various possible designs of the first aspect is implemented when the computer program is executed by a processor.

The above description is only preferred embodiments of the present disclosure and an explanation of technical principles used. Those skilled in the art should understand that the disclosed scope involved in the present disclosure is not limited to technical solutions formed by specific combinations of the above technical features, and should also cover other technical solutions formed by any combination of the above technical features or their equivalent features without departing from the above disclosed concept. For example, a technical solution formed by replacing the above features with technical features with similar functions disclosed in the present disclosure (but not limited thereto).

In addition, although the operations are depicted in a particular order, this should not be understood as requiring the operations to be performed in the particular order shown or in a sequential order. Under certain circumstances, multitasking and parallel processing may be advantageous. Similarly, although several specific implementation details are included in the above discussion, these should not be interpreted as limiting the scope of the present disclosure. Certain features described in the context of separate embodiments may also be implemented in combination in a single embodiment. On the contrary, various features described in the context of a single embodiment may also be implemented in multiple embodiments individually or in any suitable subcombinations.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. An artificial intelligence (AI) song editing method, comprising:
displaying (S101) first lyrics of a first song after the first song and the corresponding first lyrics are generated, wherein the first song is audio data generated based on artificial intelligence technology;
generating (S102) second lyrics in response to a modification instruction for first text in the first lyrics, wherein the second lyrics comprise second text corresponding to a play timestamp of the first text; and
generating (S103) a second song based on the second text in response to generating the second lyrics, wherein the second song comprises a target song segment and a non-target song segment, the target song segment is a song segment corresponding to the second text, the non-target song segment is a remaining song segment in the second song other than the target song segment, and a melody of the non-target song segment is the same as a melody of an original song segment corresponding to a play timestamp of the non-target song segment in the first song.

2. The method of claim 1, wherein the first lyrics comprise multiple lyrics text segments, and each of the lyrics text segments corresponds to one original song segment;
the displaying the first lyrics of the first song comprises:
displaying the lyrics text segments of the first lyrics and modification controls corresponding to the lyrics text segments in a line-by-line display manner, wherein the modification controls are configured to trigger the lyrics text into an editable state;
the modification instruction comprises a first instruction and a second instruction, and the generating second lyrics in response to a modification instruction for first text in the first lyrics comprises:
triggering a target lyrics text segment into the editable state in response to the first instruction for the modification control corresponding to the target lyrics text segment; and
modifying the first text in the target lyrics text segment to the second text to generate the second lyrics in response to the second instruction for the target lyrics text segment in the editable state.

3. The method of claim 2, further comprising:
displaying a play timestamp and/or play duration corresponding to the lyrics text segment before and after responding to the modification instruction.

4. The method of claim 1, wherein the generating second lyrics in response to a modification instruction for first text in the first lyrics comprises:
obtaining (S1021) a corresponding text segment to be determined in response to the modification instruction for the first text in a target lyrics text segment in the first lyrics;
determining (S1022) the text segment to be determined as a modified lyrics text segment if the number of words in the text segment to be determined is equal to a number of words in the target lyrics text segment; and
replacing (S1023) the target lyrics text segment in the first lyrics with the modified lyrics text segment to generate the second lyrics.

5. The method of claim 4, further comprising:
in response to the number of words in the text segment to be determined being not equal to the number of words in the target lyrics text segment, processing (S1024) the text segment to be determined by calling a preset generation model to generate an optimized text segment, wherein the number of words in the optimized text segment is equal to the number of words in the target lyrics text segment, and the optimized text segment has the same semantics as the text segment to be determined; and
replacing (S1025) the target lyrics text segment in the first lyrics with the optimized text segment to generate the second lyrics.

6. The method of claim 1, wherein the generating a second song based on the second text comprises:
determining (S205A-1) a first original song segment and a second original song segment in the first song based on the play timestamp of the first text, wherein the first original song segment is an original song segment corresponding to the play timestamp of the first text, and the second original song segment is a remaining original song segment in the first song other than the first original song segment;
obtaining (S205A-2) pronunciation data of the second text, and replacing a vocal component in the first original song segment with the pronunciation data to generate a target song segment, wherein a melody of the target song segment is the same as a melody of the first original song segment corresponding to a play timestamp of the target song segment in the first song; and
generating (S205A-3) the second song based on the target song segment and the second original song segment in the first song.

7. The method of claim 1, wherein the generating a second song based on the second text comprises:
determining (S205B-1) a first original song segment and a second original song segment in the first song based on the play timestamp of the first text;
calling (S205B-2) a song generation model to generate a target song segment based on the second text and the second original song segment, wherein a melody of the target song segment is different from a melody of the first original song segment corresponding to a play timestamp of the target song segment in the first song; and
generating (S205B-3) the second song based on the target song segment and the second original song segment.

8. The method of claim 1, wherein the first song and the second song belong to a same target song project, and the method further comprises:
displaying a generation record page corresponding to the target song project, wherein the generation record page is configured to display at least one of the following:
a song generation record corresponding to the target song project, wherein the song generation record comprises at least a generation record of the first song and a generation record of the second song; and
changed content of the second song relative to the first song.

9. An AI song editing apparatus, comprising:
a display module (31), configured to display first lyrics of a first song after the first song and the corresponding first lyrics are generated, wherein the first song is audio data generated based on artificial intelligence technology;
a processing module (32), configured to generate second lyrics in response to a modification instruction for first text in the first lyrics, wherein the second lyrics comprise second text corresponding to a play timestamp of the first text; and
a generation module (33), configured to generate a second song based on the second text in response to generating the second lyrics, wherein the second song comprises a target song segment and a non-target song segment, the target song segment is a song segment corresponding to the second text, the non-target song segment is a remaining song segment in the second song other than the target song segment, and a melody of the non-target song segment is the same as a melody of a second original song segment corresponding to a play timestamp of the non-target song segment in the first song.

10. An electronic device (4), comprising: a processor (41) and a memory (42);
wherein the memory stores a computer-executable instruction; and
the processor executes the computer-executable instruction stored in the memory to cause the processor to execute the AI song editing method of any of claims 1 to 8.

11. A computer-readable storage medium, wherein a computer-executable instruction is stored in the computer-readable storage medium, and when the computer-executable instruction is executed by a processor, the AI song editing method of any of claims 1 to 8 is implemented.

12. A computer program product, comprising a computer program, wherein the AI song editing method of any of claims 1 to 8 is implemented when the computer program is executed by a processor.
